# EUROPÄISCHE PATENTANMELDUNG

(11) **EP 3 326 942 A1**
(43) Veröffentlichungstag der Anmeldung: **30.05.2018**
(21) Anmeldenummer: 17194766.6
(22) Anmeldetag: 04.10.2017
(51) Int. Cl.: B65G 69/28

(54) **VERLADERAMPE**

(30) Priorität: 25.11.2016 AT 2882016 U
(71) Anmelder: EmsolPro GmbH, 6841 Mäder (AT)
(72) Erfinder: Gwehenberger, Markus, 6840 Götzis (AT)
(74) Vertreter: Fechner, Thomas

(57) **Zusammenfassung**

Eine Verladerampe weist mindestens ein eine befahrbare Rampenfläche (5d, 6d) ausbildendes Rampenteil (5, 6) mit einem Auffahrrand (5a, 6a) auf, welcher zum Auffahren eines Flurförderzeuges auf die Rampenfläche (5d, 6d) des Rampenteils (5, 6) von den Rädern (12) des Flurförderzeugs überfahrbar ist. Der Auffahrrand (5a, 6a) weist in einer Draufsicht auf die Rampenfläche (5d, 6d) des Rampenteils (5, 6) gesehen wechselweise aufeinanderfolgende vorspringende und rückspringende Bereiche auf.

## Beschreibung

Die Erfindung bezieht sich auf eine Verladerampe mit mindestens einem eine befahrbare Rampenfläche ausbildenden Rampenteil, welches einen Auffahrrand aufweist, welcher zum Auffahren eines Flurförderzeugs auf die Rampenfläche des Rampenteils von den Rädern des Flurförderzeugs überfahrbar ist.

Verladerampen dienen insbesondere zur Überbrückung des Niveaus zwischen dem Boden eines Gebäudes, beispielsweise einer Lagerhalle und der Ladefläche eines an eine Verladestelle an der Außenseite des Gebäudes andockenden Fahrzeugs. Im Weiteren wird durch die Verladerampe der Abstand zwischen der Verladestelle und dem Fahrzeug überbrückt.

Es sind Verladerampen mit einem ersten Rampenteil und einem zweiten Rampenteil bekannt, welche jeweils eine befahrbare Rampenfläche ausbilden, wobei das zweite Rampenteil gegenüber dem ersten Rampenteil in Längsrichtung der Verladerampe verschiebbar ist. Das erste Rampenteil ist hierbei verschwenkbar an einem Basisteil der Verladerampe angebracht.

Auch Verladerampen ohne ein solches verschiebbares Rampenteil sind bekannt. Solche Verladerampen können ein im Randbereich der Ladefläche des Fahrzeuges aufzulegendes klappbares Rampenteil aufweisen.

Daneben sind auch Verladerampen in anderen Ausführungsformen und/oder für andere Einsatzzwecke bekannt, beispielsweise transportable Verladerampen. Derartige Verladerampen können beispielsweise zur Überbrückung des Niveauunterschiedes zwischen der Straße und der Ladefläche eines Fahrzeuges dienen.

Verladerampen mit befahrbare Rampenflächen ausbildenden Rampenteilen werden auch als Verladebrücken, Überladebrücken oder Überladerampen bezeichnet.

Bei Verladerampen besteht das Problem, dass es zu einer Lärmbelastung kommt, wenn beispielsweise mit einem deichselgeführten Stapler Lasten über die Verladerampe transportiert werden. Eine Lärmemission entsteht vor allem beim Auffahren eines lasttragenden Rades des deichselgeführten Staplers - oder eines anderen Flurförderzeugs - über den Auffahrrand auf die Rampenfläche des Rampenteils bzw. eines jeweiligen Rampenteils. Dieser Auffahrrand ist üblicherweise zum freien Ende des Randteils hin abgeschrägt, um das Auffahren zu erleichtern. Beim Auffahren auf den Auffahrrand kommt es dennoch zu einem heftigen Schlag, der sich nicht nur auf die anderen Teile der Verladerampe sondern auch auf die Ladefläche des angedockten Fahrzeugs überträgt, wodurch der emittierte Schall noch verstärkt wird. Derart entstehende Lärmemissionen können auch zu erheblichen Belastungen für Anrainer führen.

Aufgabe der Erfindung ist es die beim Befahren einer Verladerampe mit einem Flurförderzeug, insbesondere eine deichselgeführten Stapler, entstehenden Lärmemissionen zu verringern. Erfindungsgemäß gelingt dies durch eine Verladerampe mit den Merkmalen des Anspruchs 1.

Die Verladerampe gemäß der Erfindung weist mindestens ein Rampenteil auf, dessen Auffahrrand in einer Draufsicht auf die Rampenfläche gesehen, also in einer Ansicht rechtwinkelig zur Oberfläche des Rampenteils gesehen, wechselweise aufeinanderfolgende vorspringende und rückspringende Bereiche aufweist.

Durch die erfindungsgemäße Ausbildung verläuft der Auffahrrand zumindest über den Großteil seiner Erstreckung, vorzugweise zumindest über mehr als 90% seiner Erstreckung, nicht parallel zur Achse des lasttragenden Rades des Flurförderzeuges, sondern winkelig zu dieser. Das führt dazu, dass der Auffahrrand beim Auffahren des Flurförderzeugs auf das Rampenteil nicht gleichzeitig über die gesamte Breite des lasttragenden Rades belastet wird, sodass die Belastung zunächst in einem demgegenüber kleineren Bereich beginnt. Es wirkt dadurch zunächst nicht schlagartig die gesamte Kraft, mit der das lasttragende Rad belastet ist, auf das Rampenteil ein, sondern die Kraft wird nach und nach übertragen, wodurch der Schlag und damit die Lärmemission beträchtlich verringert wird.

In einer möglichen Ausführungsform der Erfindung kann die Verladerampe ein in Längsrichtung der Verladerampe verschiebbares Rampenteil aufweisen, welches einen wechselweise aufeinanderfolgende vorspringende und rückspringende Bereiche aufweisenden Auffahrrand aufweist. Das in Längsrichtung verschiebbare Rampenteil kann hierbei gegenüber einem weiteren, in Längsrichtung unverschiebbaren Rampenteil verschiebbar sein, welches ebenfalls einen wechselweise aufeinanderfolgende vorspringende und rückspringende Bereiche aufweisenden Auffahrrand aufweist. Insbesondere kann das in Längsrichtung unverschiebbare Rampenteil oberhalb des in Längsrichtung verschiebbaren Rampenteils liegen, wobei die Räder eines Flurförderzeugs von der Rampenfläche des verschiebbaren Rampenteils über den Auffahrrand des unverschiebbaren Rampenteils auf dessen Rampenfläche fahren können.

In einer Draufsicht auf die Rampenfläche gesehen werden die wechselweise aufeinanderfolgenden vorspringenden und rückspringenden Bereiche des Auffahrrandes insbesondere durch einen gewellten und/oder gezackten und/oder gestuften Verlauf des Auffahrrandes ausgebildet.

Weitere Vorteile und Einzelheiten der Erfindung werden im Folgenden anhand der beiliegenden Zeichnung erläutert. In dieser zeigen:
Fig. 1 eine vereinfachte und schematisierte Seitenansicht eines Ausführungsbeispiels einer erfindungsgemäßen Verladerampe mit einem hinteren Abschnitt eines anzudockenden Fahrzeugs, im eingefahrenen Zustand der Verladerampe;
Fig. 2 ein vergrößertes Detail A von Fig. 1;
Fig. 3 eine Darstellung analog Fig. 1 im ausgefahrenen Zustand der Verladerampe und angedockten Zustand des Fahrzeuges zusammen mit einem lasttragenden Rad eines Flurförderzeugs kurz vor dem Auffahren auf die Verladerampe;
Fig. 4 eine Draufsicht auf das in Längsrichtung unverschiebbare Rampenteil zusammen mit dem lasttragenden Rad des Flurförderzeugs während des Auffahrens auf das Rampenteil;
Fig. 5 ein vergrößertes Detail B von Fig. 4;
Fig. 6 und 7 Schnitte entlang der Linien CC und DD von Fig. 4;
Fig. 8 und 9 vergrößerte Details E und F von Fig. 6 und Fig. 7;
Fig. 10 eine Schrägsicht;
Fig. 11 eine Draufsicht auf eine Endleiste eines Rampenteils gemäß einer zweiten Ausführungsform der Erfindung;
Fig. 12 eine Seitenansicht der Randleiste von Fig. 11;
Fig. 13 und 14 Darstellungen entsprechend Fig. 11 und Fig. 12 eines dritten Ausführungsbeispiels der Erfindung;
Fig. 15 eine Darstellung entsprechend Fig. 11 eines vierten Ausführungsbeispiels der Erfindung.
Die Figuren weisen unterschiedliche Maßstäbe auf.

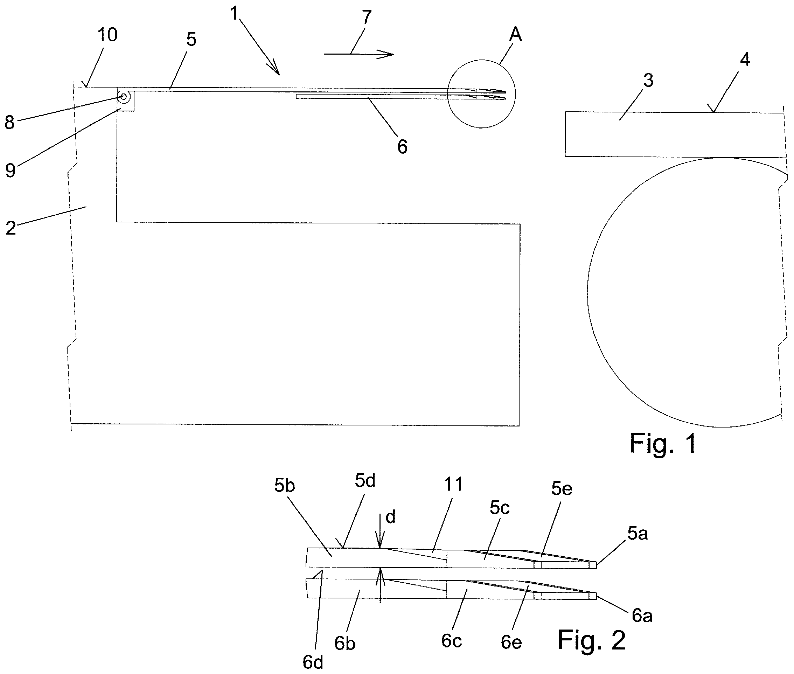

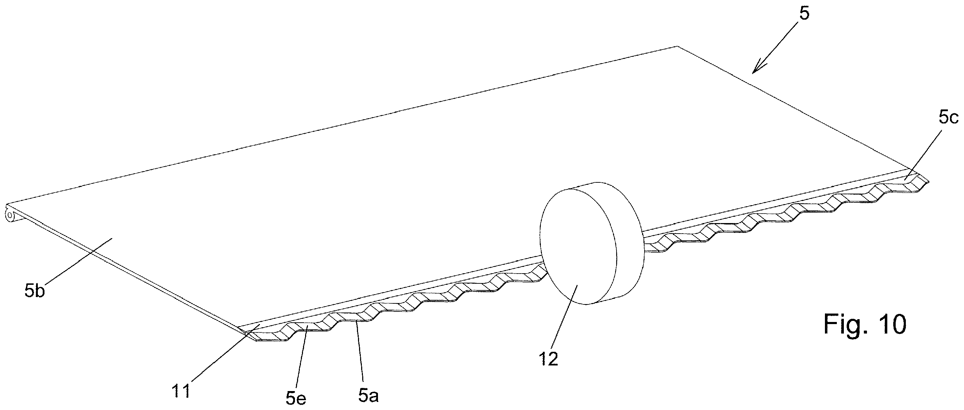

Ein erstes Ausführungsbeispiel einer Verladerampe gemäß der Erfindung wird im Folgenden anhand der Fig. 1 bis 10 erläutert.

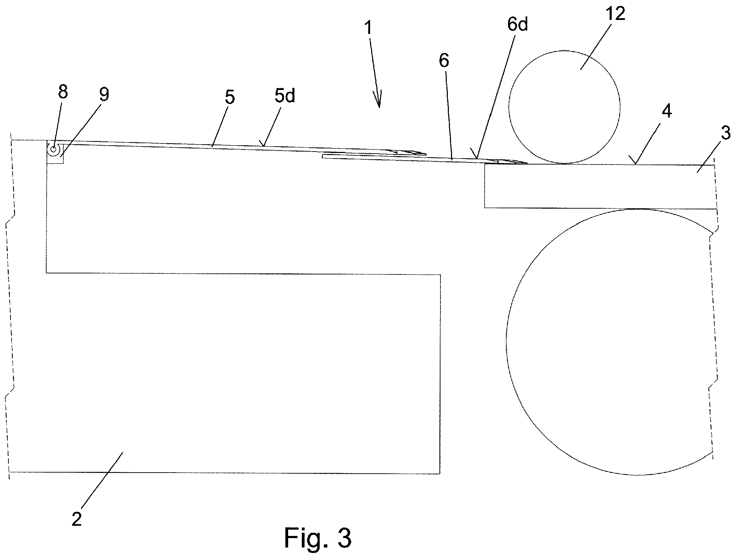

Die Verladerampe 1 ist an einem Gebäude 2, beispielsweise einer Lagerhalle, angebaut, wobei nur in den Fig. 1 und 3 ein Teil dieses Gebäudes 2 schematisch dargestellt ist. Das Gebäude kann eine oder mehrere Verladestationen aufweisen, an denen jeweils eine Verladerampe 1 angeordnet ist. An der Verladerampe 1 kann ein Fahrzeug 3 andocken, um Güter, welche auf der Ladefläche 4 des Fahrzeugs 3 abgestellt sind, in das Gebäude zu verladen oder umgekehrt.

Die Verladerampe umfasst ein erstes Rampenteil 5 und ein zweites Rampenteil 6, welches gegenüber dem ersten Rampenteil 5 in Längsrichtung 7 der Verladerampe 1 verschiebbar ist. Die Längsrichtung 7 liegt hierbei parallel zur Fahrtrichtung eines über die Verladerampe 1 zu bewegenden Flurförderzeugs, insbesondere eines deichselgeführten Staplers. Das erste Rampenteil 5 ist bezogen auf die Längsrichtung 7 unverschiebbar, aber um eine horizontale Schwenkachse 8 verschwenkbar. Ein Basisteil 9 der Verladerampe 1, an welchem das erste Rampenteil 5 verschwenkbar angebracht ist, ist hierbei nur in den Fig. 1 und 3 schematisch angedeutet.

Durch die Verschiebbarkeit des zweiten Rampenteils 6 gegenüber dem ersten Rampenteil 5 kann der Abstand zwischen der Ladefläche 4 des Fahrzeugs 3 und dem Boden 10 des Gebäudes im Bereich der Verladestation überbrückt werden. Durch die Verschwenkbarkeit des ersten Rampenteils 5 um die Schwenkachse 8 kann das zweite Rampenteil 6 mit seinem freien Ende, welches einen Auffahrrand 6a des zweiten Rampenteils bildet, auf die Ladefläche 4 aufgelegt werden. In den schematischen Fig. 1 und 3 liegen hierbei die Ladefläche 4 und der Boden 10 des Gebäudes im Bereich der Verladestation im Wesentlichen in der gleichen Höhe. In der Praxis wird die Ladefläche 4 im Allgemeinen tiefer liegen, wobei die Anpassung an den Niveauunterschied durch eine entsprechende Verschwenkung um die Schwenkachse 8 erfolgt.

Die Führungselemente zur verschiebbaren Führung des zweiten Rampenteils 6 gegenüber dem ersten Rampenteil 5 sind in den Figuren nicht dargestellt. Zur Verstellung des zweiten Rampenteils 6 gegenüber dem ersten Rampenteil 5 in Längsrichtung 7 sind Antriebselemente, beispielsweise elektrische Antriebselemente vorgesehen, die in den Figuren ebenfalls nicht dargestellt sind. Die Führungselemente und Antriebselemente können in herkömmlicher Weise ausgebildet sein. Auch eine manuelle Verschiebung des zweiten Rampenteils kann vorgesehen sein.

Im Ausführungsbeispiel sind an den von der Schwenkachse 8 abgelegenen Enden, also an den dem anzudockenden Fahrzeug 3 zugewandten Enden, von Plattenteilen 5b, 6b Endleisten 5c, 6c angebracht. Bei den Endleisten 5c, 6c handelt es sich um Nachrüstteile, mit welchen im Ausführungsbeispiel die ursprüngliche, in herkömmlicher Weise ausgebildete Verladerampe 1 ausgerüstet worden ist, um die Geräuschemission zu reduzieren. Da die von der Schwenkachse 8 abgelegenen Enden der Plattenteile 5b, 6b ursprünglich Auffahrränder ausgebildet haben, über welche das Flurförderzeug auf das jeweilige Rampenteil aufgefahren ist, sind die Plattenteile 5b, 6b an diesem Rand jeweils mit einer Anlaufschräge versehen, was am deutlichsten aus Fig. 2 ersichtlich ist. Die Endleisten 5c, 6c sind an diesen rechtwinkelig zur Längsrichtung 7 verlaufenden, von der Schwenkachse 8 abgelegenen Rändern der Plattenteile 5b, 6b angeschweißt. Auch eine andere Art der Befestigung der Endleisten 5c, 6c an den Plattenteilen 5b, 6b ist denkbar und möglich, insbesondere mittels einer Verschraubung. Die durch die Anlaufschrägen gebildeten Vertiefungen sind mit einem Auffüllmaterial 11 aufgefüllt, um einen ebenen Übergang von den Plattenteilen 5b, 6b auf die Endleisten 5c, 6c auszubilden. Beim Auffüllmaterial 11 kann es sich insbesondere um eine aushärtbare Füllmasse handeln.

Die freien Ränder der Endleisten 5c, 6c bilden Auffahrränder 5a, 6a, über welche die Räder eines Flurförderzeuges beim Befahren der Verladerampe ausgehend von der Ladefläche 4 des angedockten Fahrzeuges 3 auf die Rampenfläche 5d, 6d des jeweiligen Rampenteils 5, 6 auffahren. Ein solches Rad 12 ist in den Fig. 3, 4, 5 und 10 schematisch dargestellt. Ausgehend von der Ladefläche 4 fährt das Rad 12 somit über den Auffahrrand 6a des zweiten Rampenteils 6 auf die vom zweiten Rampenteil 6 gebildete Rampenfläche 6d. Über die Rampenfläche 6d des zweiten Rampenteils 6 gelangt das Rad 12 zum Auffahrrand 5a des ersten Rampenteils 5 und fährt über diesen auf die Rampenfläche 5d des ersten Rampenteils 5 und schließlich über den gebäudeseitigen Rand des ersten Rampenteils 5 auf den Boden 10 des Gebäudes.

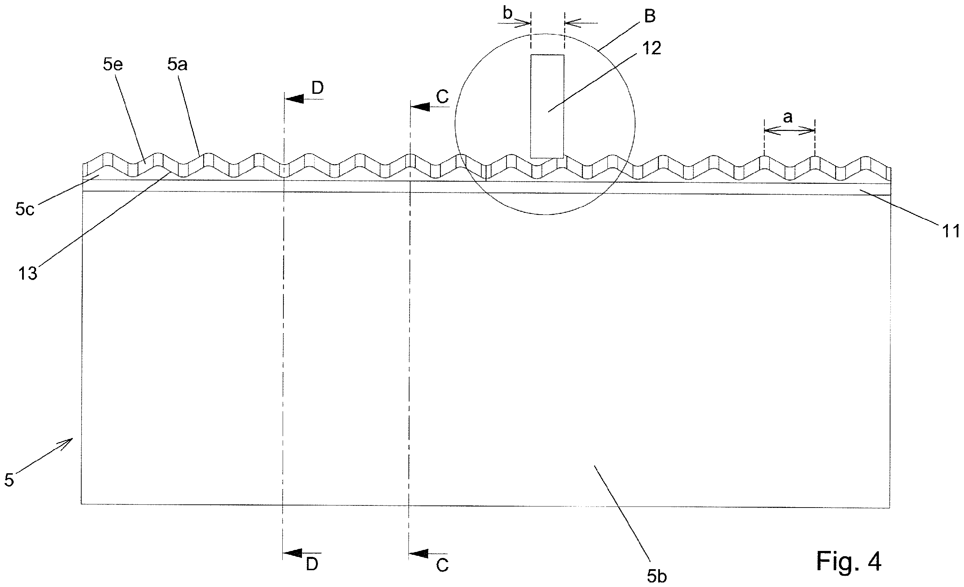

In einer Draufsicht auf die Rampenfläche 5d, 6d des jeweiligen Rampenteils 5, 6 gesehen, besitzt der jeweilige Auffahrrand 5a, 6a im Ausführungsbeispiel eine Wellenform. Der Auffahrrand 5a, 6a besitzt also wechselweise konvexe und konkave Abschnitte (welche abwechselnd vorspringende und zurückspringende Bereiche ausbilden). In Fig. 4 ist das erste Rampenteil 5 in Draufsicht dargestellt, und der wellenförmige Verlauf des Auffahrrandes 5a ist ersichtlich. Die Form des Auffahrrandes 6a ist identisch, da die am Plattenteil 6b angebrachte Endleiste 6c identisch mit der am Plattenteil 5b angebrachten Endleiste 5c ist.

Anstelle eines wellenförmigen Verlaufes des Auffahrrandes 5a und/oder 6a ist insbesondere auch ein gezackter Verlauf oder gestufter Verlauf oder eine Mischform eines gewellten und/oder gezackten und/oder gestuften Verlaufs denkbar und möglich, worauf weiter unten nochmals eingegangen wird.

Jedenfalls weist zumindest einer der Auffahrränder 5a, 6a, vorzugsweise weisen beide Auffahrränder 5a, 6a, in einer Draufsicht auf die Rampenfläche 5d und/oder 6d gesehen wechselweise aufeinanderfolgende vorspringende und rückspringende Bereiche auf. Mit anderen Worten ist der Auffahrrand 5a und/oder 6a, bezogen auf die rechtwinkelig zur Längsrichtung 7 liegende Querrichtung, zumindest über einen Teil der Erstreckung des Auffahrrandes 5a und/oder 6a, vorzugsweise über die gesamte Erstreckung des Auffahrrandes 5a und/oder 6a mit einer Abfolge von vorstehenden und zurückgezogenen Bereichen ausgebildet, wenn man das Rampenteil 5 und/oder 6 in Draufsicht betrachtet. Zwischen zwei benachbarten vorstehenden Bereichen liegt also jeweils ein zurückgezogener Bereich vor.

Die jeweilige Endleiste 5c, 6c ist anschließend an den Auffahrrand 5a, 6a der jeweiligen Endleiste 5c, 6c mit einer Anlaufschräge 5e, 6e versehen. Die jeweilige Endleiste 5c, 6c verläuft somit anschließend an ihren Auffahrrand 5a, 6a im vertikalen Längsschnitt (also im vertikalen Schnitt parallel zur Längsrichtung 7) durch die jeweilige Endleiste 5c, 6c keilförmig. Dies ist am besten in den Fig. 2, 8 und 9 ersichtlich.

Die Dicke d des jeweiligen Rampenteils 5, 6 ist im Bereich des Auffahrrandes 5a, 6a also geringer als im Bereich abseits der Anlaufschräge 5e, 6e.

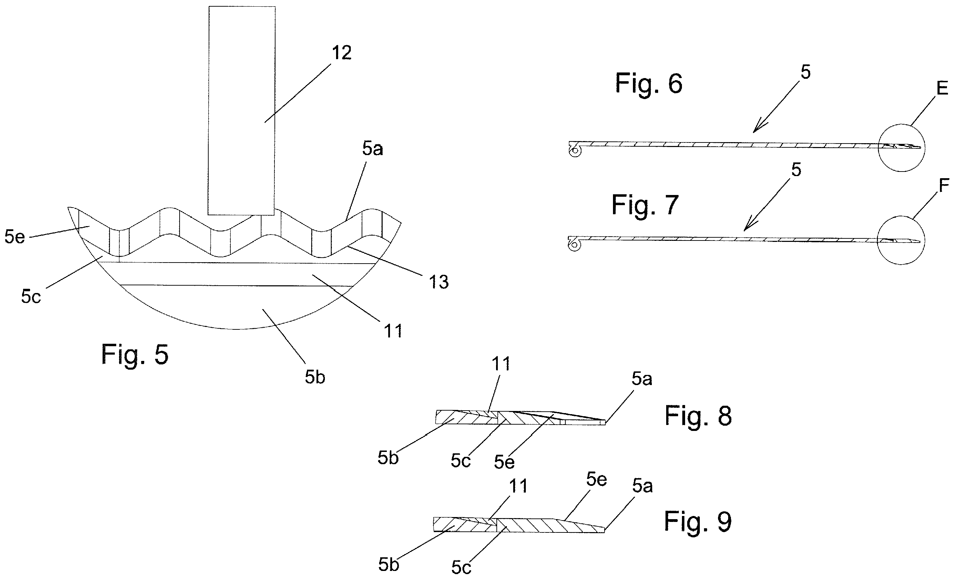

Wenn ein lasttragendes Rad 12 über den Auffahrrand 5a, 6a auf die Rampenfläche 5d, 6d des jeweiligen Rampenteils 5, 6 auffährt, so kommt das Rad durch den wellenförmigen Verlauf des Auffahrrandes 5a, 6a nicht gleichzeitig über seine gesamte Breite b zur Auflage auf das jeweilige Rampenteil 5, 6. Vielmehr fährt es zunächst über einen kleinen Abschnitt seiner Breite b auf den Auffahrrand 5a, 6a auf, wie dies insbesondere aus den Fig. 4 und 5 für den Auffahrrand 5a ersichtlich ist. Damit wird die Gewichtsbelastung des Rades 12 nach und nach auf das jeweilige Rampenteil 5, 6 übertragen.

Die Anlaufschräge 5e, 6e wird vom ebenen Bereich der Rampenfläche 5d, 6d durch eine Kurve 13 abgegrenzt, welche in Draufsicht auf das jeweilige Rampenteil 5, 6 gesehen wechselweise aufeinanderfolgende vorspringende und rückspringende Bereiche aufweist, insbesondere mit einem gewellten und/oder gezackten und/oder gestuften Verlauf ausgebildet ist. Im Ausführungsbeispiel stimmt die Kurve 13 mit der gewellten Form des Auffahrrandes 5a, 6a überein. Die Kurve 13 ist hierbei in Längsrichtung 7 gegenüber dem Auffahrrand 5a, 6a parallel verschoben. Auch bei einer abweichenden Ausbildung der Kurve 13 vom Verlauf des Auffahrrandes 5a, 6a liegen die vorspringenden Bereiche der Kurve 13 bezogen auf die rechtwinkelig zur Längsrichtung 7 liegende Querrichtung an den gleichen Stellen wie die vorspringenden Bereiche der Kurve 13 und die rückspringenden Bereiche des Auffahrrandes 5a, 6a liegen an den gleichen Stellen wie die rückspringenden Bereiche der Kurve 13.

Auf der Gebäudeseite schließt die Rampenfläche 5d des ersten Rampenteils 5 bündig an den Boden 10 an, sodass es hier beim Überfahren zu keinem größeren Schlag kommt.

Auch andere Ausbildungen der Anlaufschräge 5e, 6e und des Auffahrrandes 5a, 6a sind denkbar und möglich.

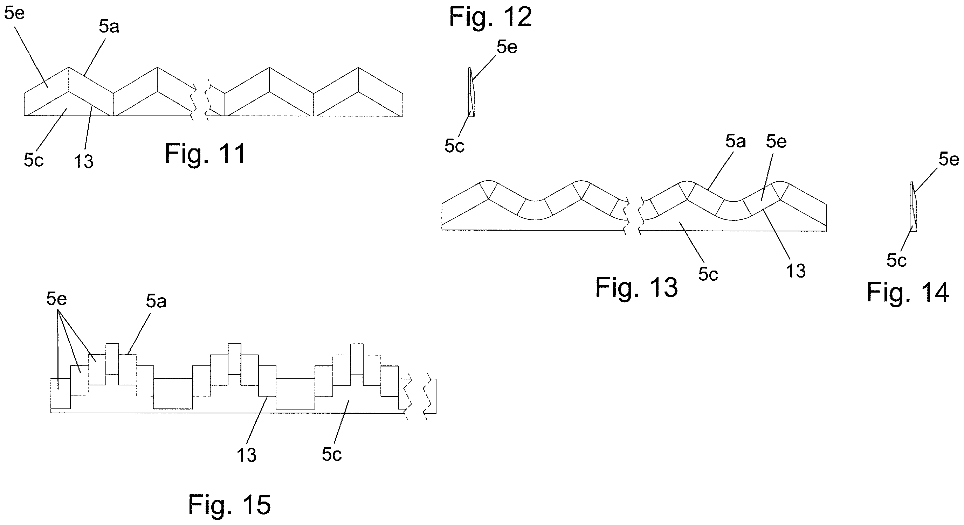

Im Ausführungsbeispiel gemäß Fig. 11 und 12 ist der Auffahrrand 5a, 6a gezackt ausgebildet, besitzt also in Draufsicht gesehen eine polygonale Form, mit Spitzen an den vordersten Stellen der Vorsprünge und dazwischenliegenden, spitz zulaufenden Tälern.

In Fig. 11 und 12 ist nur die Endleiste 5c dargestellt, mit welcher ein Plattenteil 5b einer bestehenden Rampe nachgerüstet werden kann, wie im Zusammenhang mit dem ersten Ausführungsbeispiel beschrieben. Die Endleiste 6c zum Nachrüsten des Plattenteiles 5b kann identisch mit der Endleiste 5c ausgebildet sein.

Ein drittes mögliches Ausführungsbeispiel ist in den Fig. 13 und 14 dargestellt (es ist wiederum nur die Endleiste 5c dargestellt, wobei die Endleiste 6c identisch ausgebildet sein kann). Der Auffahrrand 5a ist gewellt ausgebildet, wobei im Bereich der vordersten Stellen der Vorsprünge und tiefsten Stellen der dazwischen liegenden Rücksprünge gebogen verlaufende Abschnitte (konvexe Abschnitte in den Bereichen der Vorsprünge, konkave Abschnitte in den Bereichen der Rücksprünge) vorgesehen sind, welche durch gerade verlaufende Abschnitte miteinander verbunden sind. Die Kurve 13, die die Anlaufschräge 5e vom ebenen Bereich der Rampenfläche 5d abgrenzt, verläuft gezackt im Bereich der Vorsprünge und bogenförmig im Bereich der dazwischen liegenden Rücksprünge.

Ein viertes mögliches Ausführungsbeispiel ist aus Fig. 15 ersichtlich (es ist wiederum nur die Endleiste 5c dargestellt, wobei die Endleiste 6c identisch ausgebildet sein kann). Der Auffahrrand 5a ist hier in Draufsicht gesehen gestuft ausgebildet, wobei die Stufen zusammen nach Art eines grob gerasterten gewellten oder gezackten Verlaufs des Auffahrrandes 5a angeordnet sind. Es ergeben sich auf diese Weise wieder aufeinanderfolgende vorspringende und zurückspringende Bereiche. Die Kurve 13, welche die Anlaufschräge 5e vom ebenen Bereich der Rampenfläche 5d abgrenzt, besitzt ebenfalls in Draufsicht gesehen einen gestuften Verlauf, insbesondere den gleichen gestuften Verlauf wie der Auffahrrand 5a. Die Anlaufschräge 5e umfasst eine Mehrzahl von einzelnen Abschnitten, welche jeweils im Bereich einer Stufe des Auffahrrandes 5a und der Kurve 13 ausgebildet sind.

Unterschiedliche weitere Variationen des Auffahrrandes 5a, 6a und/oder der den Beginn der Anlaufschräge 5e, 6e ausbildenden Kurve 13 sind denkbar und möglich. So könnte der Auffahrrand 5a, 6a beispielsweise in den Bereichen der Vorsprünge bogenförmig und in den Bereichen der dazwischen liegenden Rücksprünge gezackt ausgebildet sein. Es würde sich dadurch eine "gewellt-gezackte" Ausbildung ergeben. Die Kurve 13 könnte dann beispielsweise die gleiche Form aufweisen.

Bogenförmige Abschnitte des Auffahrrandes 5a, 6a und/oder der Kurve 13 könnten auch durch einen Polygonzug von gerade verlaufenden Abschnitten angenähert sein.

Der Abstand a (vgl. Fig. 4) zwischen den Scheiteln (= den vordersten Stellen) von benachbarten vorspringenden Bereichen liegt günstigerweise im Bereich von 5cm bis 30cm, vorzugsweise im Bereich von 10cm bis 20cm. Beispielsweise kann dieser Abstand a 12cm betragen.

Im Ausführungsbeispiel sind wie beschrieben Plattenteile 5b, 6b mit Endleisten 5c, 6c nachgerüstet, um die wechselweise aufeinanderfolgenden vorspringende und rückspringende Bereiche aufweisenden Auffahrränder 5a, 6a auszubilden. Stattdessen könnte, insbesondere bei der Neuherstellung einer Verladerampe, ein jeweiliges Rampenteil 5, 6 auch mit einem einstückig ausgebildeten Plattenteil ausgebildet sein, welches an seinem der Schwenkachse 8 abgewandten Ende einen in beschriebener Weise ausgebildeten Auffahrrand aufweist, an den eine Anlaufschräge anschließt, wobei das jeweilige Plattenteil anschließend an den Auffahrrand im vertikalen Längsschnitt gesehen keilförmig ausgebildet ist.

Obwohl es bevorzugt ist, dass beide Rampenteile 5, 6 einen wechselweise aufeinanderfolgende vorspringende und rückspringende Bereiche aufweisenden Auffahrrand 5a, 6a aufweisen, wäre es grundsätzlich denkbar und möglich, dass nur eines der beiden Rampenteile 5, 6 auf diese Weise ausgebildet ist.

In anderen Ausführungsbeispielen kann eine Verladerampe auch anders ausgebildet sein. So könnte die Auffahrrampe beispielsweise ein um eine horizontale Achse verschwenkbares, in Längsrichtung aber nicht verstellbares Rampenteil aufweisen, an dessen dem anzudockenden Fahrzeug zugewandten (=der Schwenkachse gegenüber liegenden) Rand ein Rampenteil um eine horizontale Schwenkachse verschwenkbar angeordnet ist, dessen freier Rand einen in erfindungsgemäßer Weise ausgebildeten Auffahrrand ausbildet.

### Legende

### zu den Hinweisziffern:

- 1: Verladerampe
- 2: Gebäude
- 3: Fahrzeug
- 4: Ladefläche
- 5: erstes Rampenteil
- 5a: Auffahrrand
- 5b: Plattenteil
- 5c: Endleiste
- 5d: Rampenfläche
- 5e: Anlaufschräge
- 6: zweites Rampenteil
- 6a: Auffahrrand
- 6b: Plattenteil
- 6c: Endleiste
- 6d: Rampenfläche
- 6e: Anlaufschräge
- 7: Längsrichtung
- 8: Schwenkachse
- 9: Basisteil
- 10: Boden
- 11: Auffüllmaterial
- 12: Rad
- 13: Kurve

## Patentansprüche

1. Verladerampe mit mindestens einem eine befahrbare Rampenfläche (5d, 6d) ausbildenden Rampenteil (5, 6), welches einen Auffahrrand (5a, 6a) aufweist, welcher zum Auffahren eines Flurförderzeugs auf die Rampenfläche (5d, 6d) des Rampenteils (5, 6) von den Rädern (12) des Flurförderzeugs überfahrbar ist, **dadurch gekennzeichnet, dass** der Auffahrrand (5a, 6a) in einer Draufsicht auf die Rampenfläche (5d, 6d) des Rampenteils (5, 6) gesehen wechselweise aufeinanderfolgende vorspringende und rückspringende Bereiche aufweist.

2. Verladerampe nach Anspruch 1, **dadurch gekennzeichnet, dass** das Rampenteil (5, 6) anschließend an den Auffahrrand (5a, 6a) eine Anlaufschräge (5e, 6e) aufweist.

3. Verladerampe nach Anspruch 1 oder 2, **dadurch gekennzeichnet, dass** der Abstand zwischen den Scheiteln von aufeinanderfolgenden vorspringenden Bereichen des Auffahrrandes (5a, 6a) im Bereich von 5cm bis 30cm liegt.

4. Verladerampe nach einem der Ansprüche 1 bis 3, **dadurch gekennzeichnet, dass** das Rampenteil (5, 6) ein Plattenteil (5b, 6b) aufweist, an welchem eine Endleiste (5c, 6c) angebracht ist, welche den Auffahrrand (5a, 6a) aufweist.

5. Verladerampe nach Anspruch 4, **dadurch gekennzeichnet, dass** das Plattenteil (5b, 6b) im Bereich anschließend an die Endleiste (5c, 6c) eine Anlaufschräge aufweist, welche eine Vertiefung ausbildet, die mit einem Auffüllmaterial (11) aufgefüllt ist.

6. Verladerampe nach einem der Ansprüche 1 bis 5, **dadurch gekennzeichnet, dass** der Auffahrrand (5a, 6a) in einer Draufsicht auf die Rampenfläche (5d, 6d) des Rampenteils (5, 6) gesehen gewellt und/oder gezackt und/oder gestuft ausgebildet ist.

7. Verladerampe nach einem der Ansprüche 1 bis 6, **dadurch gekennzeichnet, dass** die Verladerampe ein gegenüber einem Basisteil (9) um eine horizontale Schwenkachse (8) verschwenkbar gelagertes Rampenteil (5) aufweist, dessen Auffahrrand (5a) in einer Draufsicht auf die Rampenfläche (5d) gesehen wechselweise aufeinanderfolgende vorspringende und rückspringende Bereiche aufweist.

8. Verladerampe nach einem der Ansprüche 1 bis 7, **dadurch gekennzeichnet, dass** die Verladerampe ein in Längsrichtung der Verladerampe verschiebbar gelagertes Rampenteil (6) aufweist, dessen Auffahrrand (6a) in einer Draufsicht auf die Rampenfläche (6d) gesehen wechselweise aufeinanderfolgende vorspringende und rückspringende Bereiche aufweist.

9. Verladerampe nach Anspruch 7 und Anspruch 8, **dadurch gekennzeichnet, dass** die Verladerampe ein erstes Rampenteil (5), welches um eine horizontale Schwenkachse (8) gegenüber einem Basisteil (9) der Verladerampe verschwenkbar gelagert ist, und ein zweites Rampenteil (6), welches gegenüber dem ersten Rampenteil (5) in Längsrichtung (7) der Verladerampe verschiebbar gelagert ist aufweist, wobei der Auffahrrand (5a, 6a) sowohl des ersten Rampenteils (5) als auch des zweiten Rampenteils (6) in einer Draufsicht auf die Rampenfläche (5d, 6d) des jeweiligen Rampenteils (5, 6) gesehen wechselweise aufeinanderfolgende vorspringende und rückspringende Bereiche aufweist.

10. Verladerampe nach einem der Ansprüche 2 bis 9, **dadurch gekennzeichnet, dass** die Anlaufschräge (5e, 6e) von einem ebenen Bereich der Rampenfläche (5d, 6d) durch eine Kurve (13) abgegrenzt wird, welche in Draufsicht auf das Rampenteil (5, 6) gesehen wechselweise aufeinanderfolgende vorspringende und rückspringende Bereiche aufweist.
